# FASCICULE DE BREVET EUROPEEN

(11) **EP 3 794 218 B1**
(45) Date de publication et mention de la délivrance du brevet: **09.08.2023**
(21) Numéro de dépôt: 19742440.1
(22) Date de dépôt: 14.06.2019
(51) Int. Cl.: F01D 5/14, F01D 5/18, F01D 9/04, F04D 29/68

(54) **AUBE DE TURBINE COMPRENANT UN SYSTÈME PASSIF DE RÉDUCTION DES PHÉNOMÈNES TOURBILLONAIRES DANS UN FLUX D'AIR QUI LA PARCOURT**
TURBINENSCHAUFEL MIT EINEM PASSIVEN SYSTEM ZUR REDUZIERUNG VON WIRBELPHÄNOMENEN IN EINER ÜBER DIE SCHAUFEL STRÖMENDEN LUFTSTRÖMUNG
TURBINE VANE COMPRISING A PASSIVE SYSTEM FOR REDUCING VORTEX PHENOMENA IN AN AIR FLOW FLOWING OVER SAID VANE

(30) Priorité: 15.06.2018 FR 1855266
(43) Date de publication de la demande: 24.03.2021
(73) Titulaire: SAFRAN AIRCRAFT ENGINES, 75015 Paris (FR)
(72) Inventeur: PINTAT, Ludovic, 77550 MOISSY-CRAMAYEL (FR); SCHWARTZ, Eric, Roger, 77550 MOISSY-CRAMAYEL (FR)
(74) Mandataire: Brevalex
(86) Numéro de dépôt international: PCT/FR2019/051446
(87) Numéro de publication internationale: WO 2019/239074

(56) Documents cités:
- EP-A2- 1 553 261
- FR-A5- 2 166 494
- JP-A- S55 146 201
- US-A- 2 291 828
- US-A- 4 146 352
- US-A- 4 534 701
- US-A- 5 711 650
- US-A1- 2005 238 483
- US-A1- 2017 370 228
- US-B1- 8 398 364

## Description

### DOMAINE TECHNIQUE

La présente invention concerne le domaine des turbines pour turbomachine d'aéronef, et en particulier une aube réduisant les pertes aérodynamiques.

L'invention s'applique notamment à tout type de turbomachine, tel que par exemple un turboréacteur ou un turbopropulseur.

### ÉTAT DE LA TECHNIQUE ANTÉRIEURE

Dans une turbomachine d'aéronef, la turbine récupère l'énergie des gaz comprimés dans les étages de compresseur et échauffés dans la chambre de combustion, pour la transformer en énergie mécanique.

La turbine comprend des roues mobiles et des distributeurs fixes qui sont agencés en alternance selon la direction axiale de la turbomachine, et qui portent chacun une pluralité d'aubes. Ces aubes sont régulièrement réparties sur la circonférence d'un disque qui les porte et comprennent chacune une pale qui s'étend radialement en étant prolongée par une plateforme aux extrémités radialement interne et externe de cette pale. Le distributeur est configuré pour dévier le flux d'air de sorte à alimenter efficacement la roue mobile consécutive qui récupère l'énergie de ce flux la traversant pour la restituer dans son mouvement à la soufflante et aux compresseurs de la turbomachine. Des exemples de conception d'une telle turbine sont par exemple connus du document FR 3 034 129 A1, du document JP S55 146201 A et du document US 4 534 701 A1.

Dans l'environnement de turbine, différents phénomènes physiques d'écoulement se développent autour des aubes. Il est classiquement observé des écoulements dits « secondaires » qui se présentent le plus souvent sous la forme de structures tourbillonnaires initiées aux niveaux des plateformes d'aube.

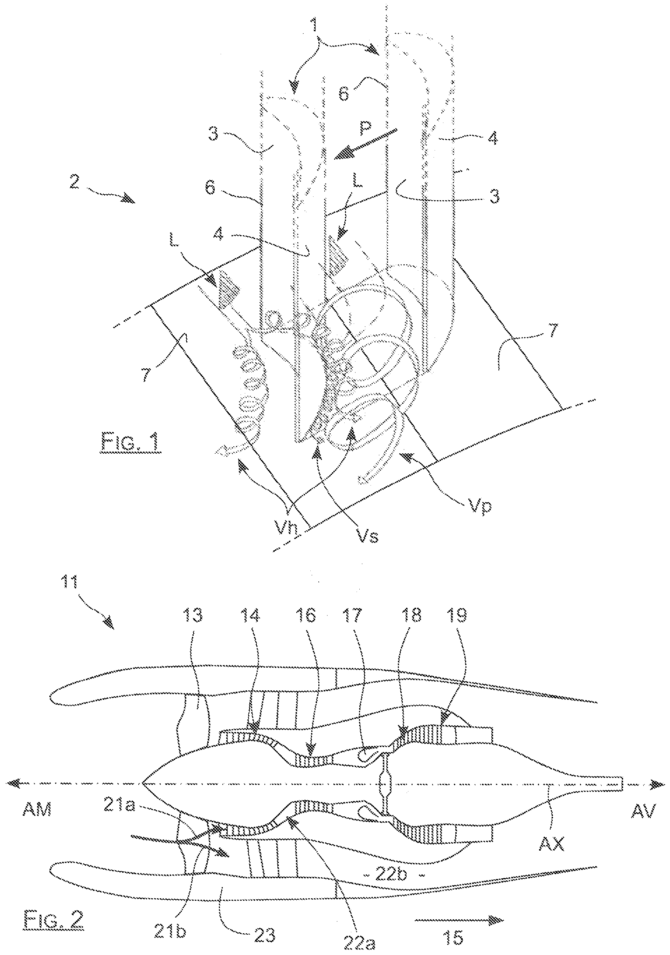

En pratique, au niveau d'une rangée d'aubes 1, ici de redresseur 2 repéré sur la figure 1, le flux d'air provenant de l'amont subit l'effet conjugué du champ potentiel P régnant entre deux aubes adjacentes et orienté de l'intrados 3 vers l'extrados 4 des pales, avec un changement de direction et de vitesse induit par le bord d'attaque 6 formant un obstacle. Ce champ P étant suffisamment important pour dévier la couche limite de l'écoulement amont au niveau de la plateforme 7, il s'ensuit l'apparition de tourbillons. On distingue des tourbillons dits « en fer à cheval » Vh caractérisés par deux branches contrarotatives réparties de part et d'autre de l'aube, un tourbillon de passage Vp de débit important se développant entre le canal défini entre les aubes, et des tourbillons de coins Vs longeant les lignes de raccordement entre la pale et les plateformes.

Ces écoulements secondaires ne sont pas orientés dans le sens d'écoulement principal du flux parcourant les aubes et ne contribuent donc pas à fournir de l'énergie à la roue, occasionnant des pertes de rendement et une augmentation de la consommation en kérosène de la turbomachine.

Le but de l'invention est de proposer une structure d'aube permettant de supprimer la couche limite, marquée par une faible vitesse de propagation de l'air en amont de l'aube, de manière à réduire sensiblement les structures tourbillonnaires.

### EXPOSÉ DE L'INVENTION

A cet effet, l'invention a pour objet une aube pour turbine de turbomachine, telle qu'un turboréacteur, comprenant :
- une pale incluant un bord d'attaque et un bord de fuite et destinée à être baignée dans un flux d'air circulant d'amont en aval depuis le bord d'attaque vers le bord de fuite ;
- au moins une plateforme terminant une extrémité de la pale, cette plateforme comportant une face de glissement d'air à son interface avec la pale ;
- -au moins un circuit de circulation d'air incluant :
   - une ouverture d'aspiration d'air formée sur la face de glissement de la plateforme, dans une zone en amont du bord d'attaque ou dans une zone correspondant à la moitié amont de la pale ;
   - une ouverture d'éjection d'air formée au bord de fuite de la pale ;
   - un conduit interne reliant l'ouverture d'aspiration d'air à l'ouverture d'éjection d'air.

Avec cette solution, l'invention permet ainsi de limiter les phénomènes tourbillonnaires qui se développent autour de l'aube en isolant au sein de celle-ci la couche limite parcourant la plateforme pour la réinjecter dans la veine au niveau du bord de fuite.

L'invention concerne également une aube ainsi définie, dans laquelle le conduit interne forme un serpentin comprenant au moins une ondulation.

L'invention concerne également une aube ainsi définie, dans laquelle les ouvertures d'aspiration sont des orifices, et les ouvertures d'éjection d'air sont des fentes.

L'invention concerne également une aube ainsi définie, dans laquelle le conduit interne est configuré pour éjecter l'air au travers de l'ouverture d'éjection d'air suivant une direction qui est à 10° près celle de la de propagation du flux d'air longeant la pale, en aval du bord de fuite.

Avec cet agencement, le rendement global d'une turbine équipée d'une telle aube est optimisé.

L'invention concerne également une aube ainsi définie, dans laquelle le conduit interne relie une pluralité d'ouvertures d'aspiration d'air à une ouverture d'éjection d'air.

L'invention concerne également une aube ainsi définie, dans laquelle le conduit interne relie une ouverture d'aspiration d'air à une pluralité d'ouvertures d'éjection d'air.

L'invention concerne également une aube ainsi définie, comprenant une plateforme radialement intérieure et une plateforme radialement extérieure, et comprenant un premier circuit de circulation d'air au niveau de la plateforme radialement intérieure, et un second circuit de circulation d'air au niveau de la plateforme radialement extérieure.

L'invention concerne également une aube ainsi définie, obtenue par fabrication additive.

L'invention concerne également une turbine pour turbomachine d'aéronef comprenant au moins une aube ainsi définie, la turbine étant préférentiellement une turbine basse pression.

L'invention concerne également une turbomachine d'aéronef comprenant au moins une turbine ainsi définie, la turbomachine étant préférentiellement une turbomachine à double corps.

### BRÈVE DESCRIPTION DES DESSINS

- La figure 1 déjà décrite est une illustration de la problématique d'écoulement tourbillonnaire induit par un décollement de couche limite au niveau d'une plateforme d'aube ;
- La figure 2 est une vue schématique en coupe axiale d'un turboréacteur à double flux selon l'invention ;
- La figure 3 illustre une demi-vue schématique d'une turbine basse pression de turbomachine selon l'invention ;
- La figure 4 est une vue de détail d'une partie de la turbine montrée sur la figure 3 qui illustre une problématique d'écoulement tourbillonnaire ;
- La figure 5 est une vue en perspective d'une aube comprenant un système de réduction de tourbillons selon l'invention ;
- La figure 6 est une vue en perspective d'une aube comprenant un système de réduction de tourbillons selon une variante de réalisation de l'invention ;
- La figure 7 est une vue de détail d'une distribution en éventail d'orifices d'aspiration d'air selon une variante de réalisation de l'invention.

### EXPOSÉ DÉTAILLÉ DE MODES DE RÉALISATION PARTICULIERS

En référence à la figure 2, il est représenté une turbomachine 11 d'aéronef, selon un mode de réalisation préféré de l'invention. Il s'agit ici d'un turboréacteur à double flux et à double corps. Néanmoins, il pourrait s'agir d'une turbomachine d'un autre type, par exemple un turbopropulseur, sans sortir du cadre de l'invention.

La turbomachine 11 présente un axe central longitudinal AX autour duquel s'étendent ses différents composants. Elle comprend, d'amont AM en aval AV selon une direction principale 15 d'écoulement des gaz à travers cette turbomachine, une soufflante 13, un compresseur basse pression 14, un compresseur haute pression 16, une chambre de combustion 17, une turbine haute pression 18 et une turbine basse pression 19.

De manière conventionnelle, après avoir traversé la soufflante, l'air se divise en un flux primaire central 21a et un flux secondaire 21b qui entoure le flux primaire. Le flux primaire 21a s'écoule dans une veine primaire 22a de circulation des gaz traversant les compresseurs 14, 16, la chambre de combustion 17 et les turbines 18, 19. Le flux secondaire 21b s'écoule quant à lui dans une veine secondaire 22b délimitée par un carter moteur, entouré d'une nacelle 23.

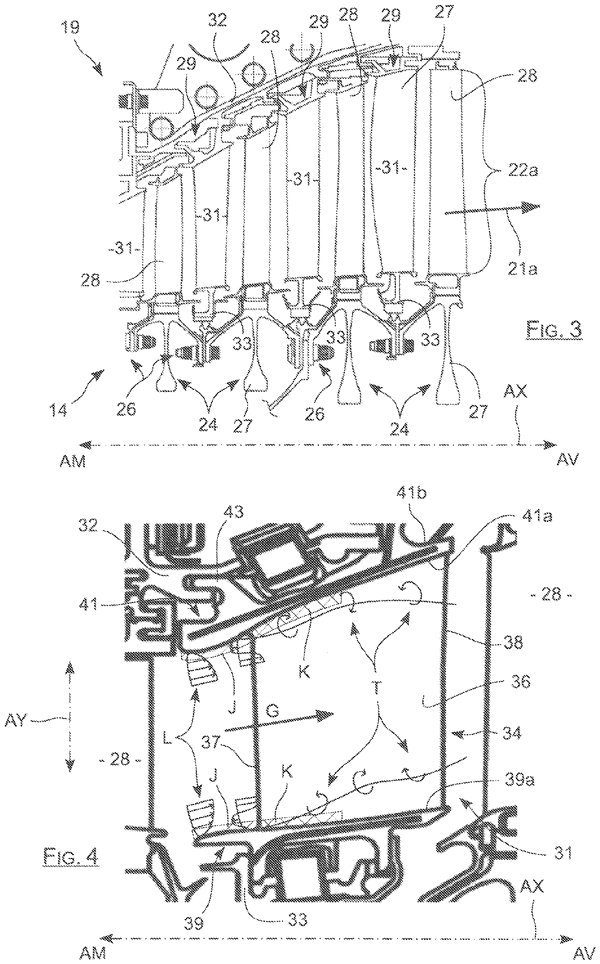

La figure 3 représente une partie de la turbine basse pression 19. Néanmoins, l'invention pourrait également s'appliquer à la turbine haute pression 18, sans sortir du cadre de l'invention. Cette turbine basse pression 19 comprend une pluralité de roues mobiles repérées par 24 et au nombre de quatre à titre d'exemple, solidaires les unes des autres par bridage 26. Ces roues mobiles 24 comportent chacune un disque 27, d'axe de révolution AX, portant une cascade d'aubes rotatives 28 réparties circonférentiellement. Entre chaque couple formé de deux roues mobiles 24 successives est positionné un distributeur 29 comprenant une rangée annulaire d'aubes fixes 31. Ces aubes fixes 31 sont montées à leurs extrémités radialement externes par rapport à l'axe AX sur un carter externe de turbine 32 entourant la turbine basse pression 19, et à leurs extrémités radialement internes par des secteurs de virole fixes 33. En fonctionnement, le flux primaire 21a s'écoule dans la veine primaire 22a traversée par les aubes rotatives 28 qui le ralentissent en extrayant son énergie et les aubes fixes 31 qui l'accélèrent en le redressant.

Pour la suite, on se reportera à la figure 4 représentant de façon détaillée dans un sens amont-aval deux aubes rotatives 28 entre lesquelles se trouve une aube fixe 31. L'aube fixe 31 comporte une pale 34 s'étendant suivant une direction radiale AY. Cette pale 34 inclut une paroi d'intrados 36 et une paroi d'extrados, non visible, qui sont réunies dans une région amont AM de la pale par un bord d'attaque 37 et dans une région aval AV de la pale par un bord de fuite 38. En outre, la pale 34 est prolongée de part et d'autre de ses extrémités radiales par une plateforme radialement intérieure 39 et une plateforme radialement extérieure 41. Ces plateformes radialement intérieure et extérieure comportent respectivement une face de glissement inférieure et supérieure 39a et 41a en vis-à-vis l'une de l'autre dans la direction radiale AY. Ces faces de glissement 39a et 41a, à l'interface entre la plateforme associée et la pale, ou autrement dit à partir de laquelle s'étend la pale, délimitent conjointement la veine primaire 22a.

La plateforme radialement extérieure 41 comporte notamment une face d'attache supérieure 41b à partir de laquelle dépassent des bulbes supérieurs 43 assurant le maintien de l'aube sur le carter externe de turbine 32.

En fonctionnement, le flux primaire 21a qui s'écoule dans la veine primaire 22a suit une direction globale de propagation G. Des parties de ce flux repérées par L sont contiguës aux faces de glissement 39a et 41a, appelées également « couches limites », et marquées par de faibles vitesses de propagation du fait du frottement avec ces faces. Les couches limites se présentent sous la forme de lames d'air glissant les unes sur les autres et suivant un mouvement rectiligne et parallèle. Il est observé qu'à l'approche du bord d'attaque 37, les champs de vitesse et de pression sont perturbés et les lames disparaissent en induisant un caractère désordonné à cette partie de l'écoulement, autrement dit des phénomènes tourbillonnaires T, comme représentés sur la figure 4.

L'idée à la base de l'invention est de supprimer la couche limite L située dans une zone repérée par J en amont du bord d'attaque ou dans une zone repérée par K correspondant à la moitié amont de la pale, de manière à réduire sensiblement les structures tourbillonnaires induites par son décollement. Cette zone K est délimitée par le bord d'attaque 37 et une ligne fictive se situant à mi-distance entre ce bord d'attaque et le bord de fuite 38 de la pale 34.

A cet égard, la particularité majeure de l'invention réside dans l'ajout d'un système de réduction de tourbillons faisant partie intégrante de l'aube 31. Il va être décrit l'une des aubes fixe 31 comportant un tel système, mais il est noté que l'invention telle qu'elle va être décrite peut s'appliquer à toutes la rangée d'aubes 31 de distributeur, ou bien seulement à certaines de ces aubes. Ce système de réduction de tourbillons est prévu pour dérouter la couche limite avant qu'elle ne se distorde et ne rencontre le bord d'attaque 37 en zone J, ou du moins ne progresse au-delà de la zone K, autrement dit ne se propage au-delà de la moitié amont de la pale de l'aube 31 dans le canal défini avec l'aube fixe adjacente lorsque le redresseur est installé sur la turbomachine.

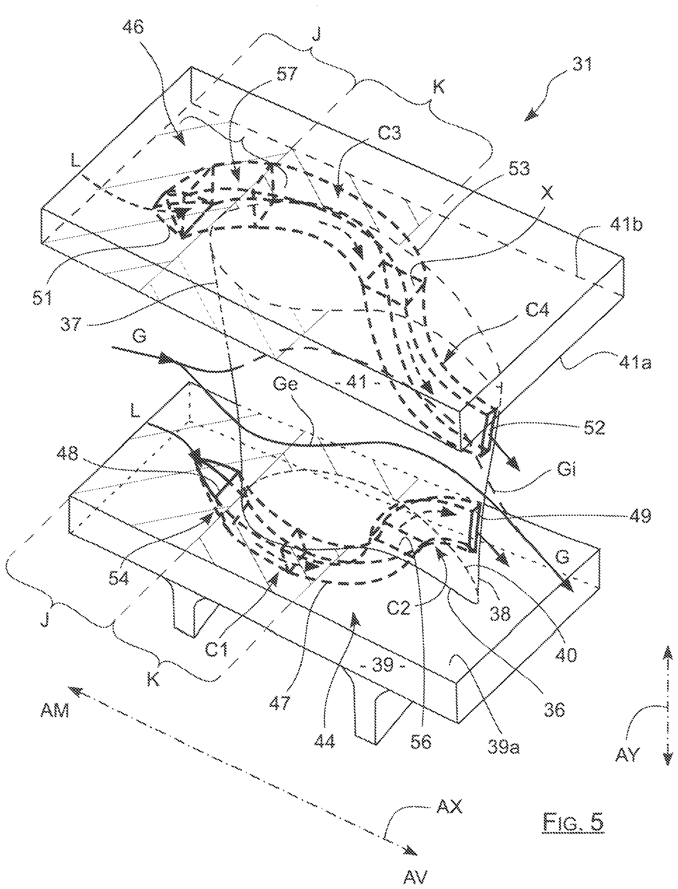

En référence à la figure 5, ce système comprend un circuit intérieur 44 de circulation d'air associé à la plateforme radialement intérieure 39, et un circuit extérieur 46 de circulation d'air associé à la plateforme radialement extérieure 41, ces circuits intérieur et extérieur 44 et 46 étant des volumes évidés dans l'aube avec une forme en serpentin. Le circuit intérieur 44 comporte un conduit interne intérieur 47 qui s'étend d'amont en aval dans la plateforme puis dans la pale 34. Ce conduit intérieur 47 relie un orifice intérieur 48 d'aspiration d'air formé au niveau de la face de glissement supérieure 39a, avec une fente intérieure 49 d'éjection d'air débouchant au niveau du bord de fuite 38. De la même manière, le circuit extérieur 46 comporte un orifice extérieur 51 d'aspiration d'air formé au niveau de la face de glissement inférieure 41a et en amont du bord d'attaque 37, et une fente extérieure 52 d'éjection d'air formée au niveau du bord de fuite 38. Une communication fluidique entre l'orifice extérieur 51 et la fente extérieure 52 est assurée par un conduit interne extérieur 53 s'étendant d'amont en aval dans la plateforme radialement extérieure 41 puis dans la pale 34. Les circuits intérieur et extérieur illustrés sur la figure 5 présentent chacun un orifice d'aspiration prévu en zone J, mais il est entendu qu'ils peuvent être formés dans la zone K sans sortir du cadre de l'invention.

Dans la description qui va suivre, les circuits intérieur et extérieur 44 et 46 vont être décrits dans le sens amont-aval, autrement dit du bord d'attaque vers le bord de fuite, et notamment au regard de la direction de propagation du flux en leur sein, schématisé par des flèches, qui est conditionnée par leur morphologie.

Dans le prolongement de l'orifice intérieur 48, le conduit intérieur 47 forme une rampe intérieure 54 dirigée vers la face d'attache 39b, autrement dit qui s'éloigne de la face de glissement 39a, et de faible inclinaison avec la face de glissement 39a. Cet arrangement permet de limiter les pertes de charges susceptibles de limiter le débit du flux d'air introduit dans le conduit à travers l'orifice intérieur 48. Ensuite, ce conduit intérieur 47 présente une première courbure C1, de forme concave vu de la plateforme extérieure 41 opposée, en se prolongeant radialement vers la pale 34 jusqu'à traverser la face de glissement 39a, au niveau d'une zone repérée par 56, et évoluer au sein de cette pale. Enfin, une seconde courbure C2 de forme convexe vu de la plateforme extérieure 41 est prévue pour redresser le flux d'air afin qu'il débouche sur le bord de fuite selon sensiblement la direction globale de propagation G caractérisée au voisinage aval de celui-ci. Quelques degrés d'écart sont tolérés, de préférence avec un écart maximum de 10° par rapport à la direction globale de propagation G. La présence d'une succession de courbures C1 et C2 marque une ondulation du conduit intérieur 47, autrement dit un point d'inflexion, lui donnant son caractère serpentin.

Comme illustré sur la figure 5, il est entendu par direction de propagation G au voisinage aval du bord de fuite, la résultante des contournements du flux 21a de part et d'autre des parois d'intrados et d'extrados 40 repérés respectivement par Gi et Ge. Comme il est compris, cette direction de propagation au voisinage aval du bord de fuite est différente de celle mesurée au voisinage amont du bord d'attaque.

Dans l'exemple de la figure 5, les circuits intérieur et extérieur présentent des morphologies globalement miroir, le flux d'air circulant au sein du circuit extérieur 46 se comportant de la même manière que celui se propageant au sein du circuit intérieur 44, vu de la pale. Au sein de la plateforme extérieure 41, le conduit extérieur 53 forme une rampe extérieure 57 prévue dans le prolongement de l'orifice extérieur 51 et dirigée vers la face d'attache 41b, autrement dit qui s'éloigne de la face de glissement 41a. De la même manière que pour la rampe intérieure 54, cette rampe extérieure 57 présente avantageusement une faible inclinaison avec la face de glissement 41a. Le conduit extérieur 53 forme une première courbure C3, de forme concave vu de la plateforme intérieure 39 opposée, en s'étendant radialement vers la face de glissement 41a dans le prolongement de la rampe extérieure 57. Il traverse ensuite la face de glissement 41a, au niveau d'une zone repérée par 58, avant de former une seconde courbure C4 de forme convexe vu de la plateforme intérieure 39. Cette courbure C4 est prévue pour redresser le flux jusqu'à atteindre la fente extérieure 52 en l'orientant sensiblement suivant la direction globale de propagation G au voisinage aval du bord de fuite, de préférence avec un écart maximum de 10°. De la même manière que dans le cas du circuit intérieur 44, cette succession de courbures C3 et C4 confère au conduit extérieur 53 son caractère serpentin.

Dans la mesure où la pression établie en bord de fuite est plus faible qu'au bord d'attaque, il en résulte un phénomène naturel d'aspiration du flux au travers des orifices d'aspiration 48 et 51. Cet aspect signifie que les circuits intérieur et extérieur 44 et 46 se suffisent à eux-mêmes, en conférant au système de réduction de tourbillons un fonctionnement passif qui constitue un avantage significatif par rapport à un système dit « actif » nécessitant une intervention externe.

Concrètement, l'invention permet d'isoler dans l'aube fixe 31 la couche limite L, source d'apparition de phénomènes secondaires, qui parcourt initialement les plateformes 39 et 41, pour ensuite la réintroduire en zone de bord de fuite 38 dans le flux primaire 21a qui en était appauvri. Il est ici compris que cette réintroduction d'air, intervenant sensiblement dans la direction de propagation G et avant que le flux primaire 21a n'atteigne l'aube rotative 28 consécutive dans la veine, va donc participer pleinement à la mise en rotation de cette aube. Avec cette solution, le gain apporté sur le rendement de la turbine est significatif, le flux primaire étant utilisé dans son intégralité tout en étant moins assujetti aux tourbillons parasites qui dispersent l'énergie.

Dans l'exemple de la figure 5, les circuits intérieur et extérieur présentent une morphologie similaire, avec un conduit reliant un orifice d'aspiration prévu en zone J et une fente d'éjection de part et d'autre de la pale suivant la direction axiale AX. Cependant, l'invention pourrait prévoir un arrangement différent dès lors qu'est permis un acheminement de l'air, s'écoulant initialement au niveau des plateformes, à travers l'aube pour être réinjecté dans la veine.

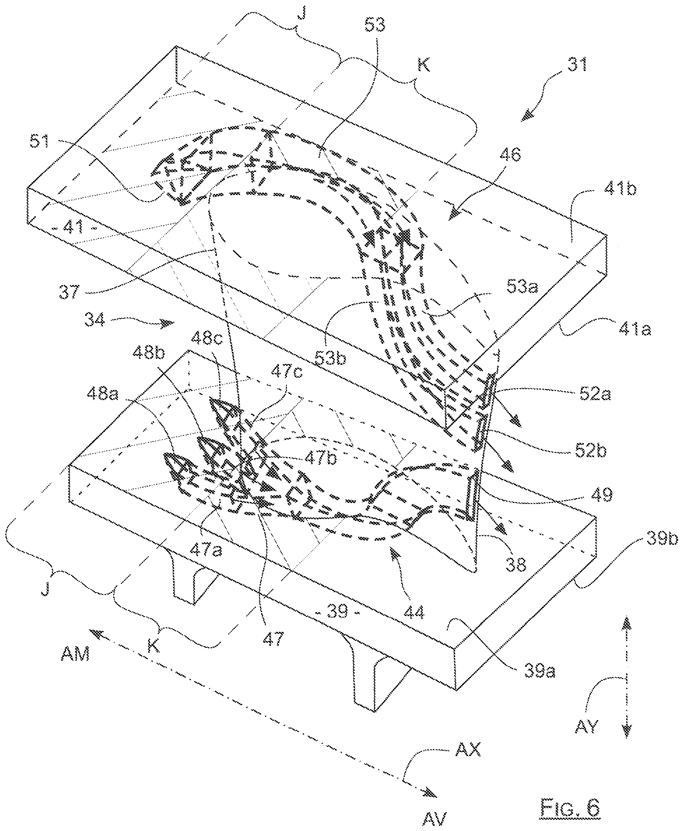

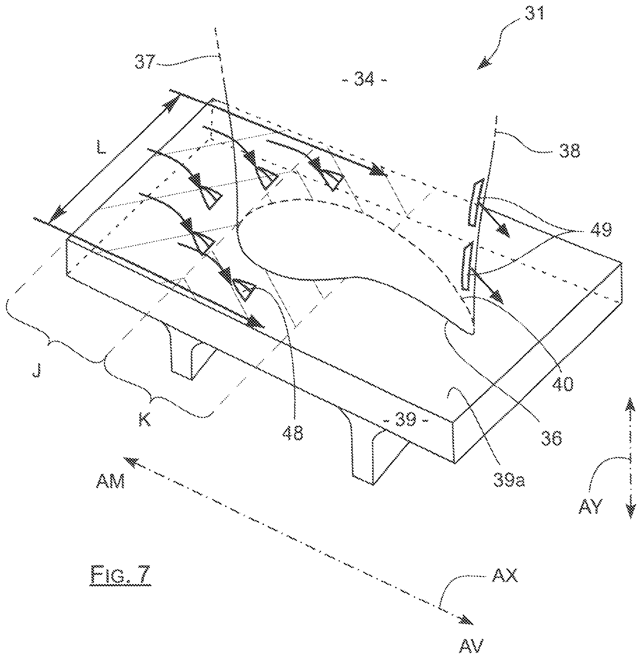

A cet égard, selon une variante de l'invention, comme illustré sur la figure 6, un circuit peut présenter une pluralité d'orifices d'aspiration, ici associés de manière non limitative au circuit intérieur 44 et au nombre de trois prévus en zone J. Ces orifices d'aspiration, repérés par 48a, 48b et 48c, sont avantageusement distribués en quinconce sur la face de glissement 39a pour collecter efficacement le flux d'air contigu à cette face. Le conduit intérieur comporte trois ramifications 47a, 47b et 47c associées chacune à un orifice d'aspiration. Une autre particularité consiste à former plusieurs fentes d'éjection le long du bord de fuite, ici associées de manière non limitative au circuit extérieur 46 et repérées par 52a et 52b. A cet effet, le conduit extérieur 53 se scinde en deux passages 53a et 53b débouchant chacun sur une fente. Il est entendu également qu'un arrangement mixte peut être retenu sans sortir du cadre de l'invention, avec la possibilité pour un circuit de présenter plusieurs orifices d'aspiration ainsi que plusieurs fentes d'éjection. Il est à noter également, qu'une telle aube pourrait comporter plusieurs circuits au niveau d'une même plateforme sans sortir du cadre de l'invention, ces circuits pouvant être indépendants ou raccordés ensemble. De la même manière, l'invention pourrait prévoir qu'un circuit intérieur et un circuit extérieur s'intersectent dans la pale 34. Enfin, dans le cas d'une pluralité d'orifices d'aspiration associés à un circuit, ceux-ci peuvent être distribués en totalité dans la zone J, en totalité dans la zone K, ou encore avec une partie dans la zone J et l'autre partie dans la zone K. Dans le cas de cette dernière alternative, l'invention prévoit avantageusement une disposition en éventail comme illustrée sur la figure 7, à titre non limitatif au niveau de la plateforme intérieure 39, pour balayer une grande partie de la couche limite L et ainsi capturer un maximum de lignes de courant.

En pratique, la morphologie et le dimensionnement de chacun des circuits conditionnent directement le débit de l'air qu'ils acheminent. A cet égard, ces paramètres sont déterminés selon le cas d'espèce, au regard notamment de la localisation prédéfinie de l'aube au sein de la veine, afin de tendre vers le système le plus optimisé. L'invention pourrait notamment prévoir un conduit interne comprenant plus d'une ondulation, autrement dit plus de deux courbures, notamment s'il s'agit d'adapter la forme de ce conduit à un encombrement particulier au sein de la pale et ou de la plateforme.

Les circuits peuvent être réalisés à l'aide de noyaux dans le cas d'une fabrication par fonderie. Néanmoins, en raison de la complexité de forme des circuits intérieur et extérieur 44 et 46, l'invention prévoit avantageusement de recourir à la fabrication additive pour fabriquer l'aube, à titre non limitatif par fusion laser métallique sur lit de poudre. Préférentiellement, la pale et les plateformes sont fabriquées d'un seul tenant avec des volumes évidés en leur sein délimitant les circuits.

Dans la description ci-dessus, le système de réduction de tourbillons a été expliqué dans le cas où il fait partie intégrante d'une aube fixe 31 de redresseur. Il est cependant à noter qu'un tel système pourrait trouver également son application dans une aube rotative, sans sortir du cadre de l'invention. Une telle aube rotative 28 comprend une pale généralement terminée par une plateforme, la couche limite parcourant cette plateforme étant également assujettie à des phénomènes tourbillonnaires.

Bien entendu, en ce qui concerne les orifices d'aspiration d'air et fentes d'éjection d'air, l'invention ne se limite pas à ces désignations spécifiques et permet tout type de forme dès lors qu'ils constituent respectivement des ouvertures d'aspiration d'air pratiquées dans la plateforme et des ouvertures d'éjection d'air prévues dans la pale. Ces ouvertures peuvent être par exemple à section ovoïde, rectangulaire, triangulaire, parallélépipédique, conique, prismatique, ou toute autre forme que l'homme du métier pourrait considérer.

## Revendications

1. Aube (31) pour turbine de turbomachine, telle qu'un turboréacteur, comprenant :
- une pale (34) incluant un bord d'attaque (37) et un bord de fuite (38) et destinée à être baignée dans un flux d'air (21a) circulant d'amont en aval depuis le bord d'attaque vers le bord de fuite ;
- au moins une plateforme (39 ; 41) terminant une extrémité de la pale (34), cette plateforme comportant une face de glissement (39a ; 41a) d'air à son interface avec la pale (34);
- -au moins un circuit de circulation d'air (44 ; 46) incluant :
- une ouverture d'aspiration d'air (48; 51) formée sur la face de glissement (39a; 41a) de la plateforme (39 ; 41), dans une zone en amont du bord d'attaque (J) ou dans une zone correspondant à la moitié amont de la pale (34) ; **caractérisée en ce que** le circuit de circulation d'air (44 ; 46) inclut une ouverture d'éjection d'air (49 ; 52) formée au bord de fuite (38) de la pale (34) ; et - un conduit interne (47 ; 53) reliant l'ouverture d'aspiration d'air (48, 51) à l'ouverture d'éjection d'air (49, 52).

2. Aube (31) selon la revendication 1, dans laquelle le conduit interne (47 ; 53) forme un serpentin comprenant au moins une ondulation.

3. Aube (31) selon la revendication 1 ou 2, dans laquelle les ouvertures d'aspiration sont des orifices, et les ouvertures d'éjection d'air sont des fentes.

4. Aube (31) selon l'une quelconque des revendications 1 à 3, dans laquelle le conduit interne (47 ; 53) est configuré pour éjecter l'air au travers de l'ouverture d'éjection d'air (49 ; 52) suivant une direction qui est à 10° près celle de la de propagation (G) du flux d'air (21a) longeant la pale (34), en aval du bord de fuite (38).

5. Aube (31) selon l'une quelconque des revendications 1 à 4, dans laquelle le conduit interne (47 ; 53) relie une pluralité d'ouvertures d'aspiration d'air (48 ; 51) à une ouverture d'éjection d'air (49 ; 52).

6. Aube (31) selon l'une quelconque des revendications 1 à 4, dans laquelle le conduit interne (47 ; 53) relie une ouverture d'aspiration d'air (48 ; 51) à une pluralité d'ouvertures d'éjection d'air (49 ; 52).

7. Aube (31) selon l'une quelconque des revendications précédentes, comprenant une plateforme radialement intérieure (39) et une plateforme radialement extérieure (41), et comprenant un premier circuit de circulation d'air (44) au niveau de la plateforme radialement intérieure (39), et un second circuit de circulation d'air (46) au niveau de la plateforme radialement extérieure (41).

8. Aube (31) selon l'une quelconque des revendications précédentes, obtenue par fabrication additive.

9. Turbine (18 ; 19) pour turbomachine d'aéronef comprenant au moins une aube (31) selon l'une quelconque des revendications précédentes, la turbine étant de préférence une turbine basse pression (19).

10. Turbomachine d'aéronef (11) comprenant au moins une turbine (18 ; 19) selon la revendication précédente, la turbomachine étant de préférence une turbomachine à double corps.

## Patentansprüche

1. Schaufel (31) für eine Turbine einer Turbomaschine, wie eines Turbotriebwerks, umfassend:
- ein Schaufelblatt (34), das eine Vorderkante (37) und eine Hinterkante (38) beinhaltet, und dazu bestimmt ist, von einem Luftstrom (21a) umströmt zu werden, der von der Vorderkante zur Hinterkante von stromaufwärts nach stromabwärts zirkuliert;
- mindestens eine Plattform (39; 41), die ein Ende des Schaufelblattes (34) abschließt, wobei diese Plattform eine Luftgleitfläche (39a; 41a) an ihrer Schnittstelle mit dem Schaufelblatt (34) beinhaltet;
- mindestens einen Luftzirkulationskreis (44; 46), Folgendes beinhaltend:
- eine Luftansaugöffnung (48; 51), die auf der Gleitfläche (39a; 41a) der Plattform (39; 41) in einem Bereich stromaufwärts der Vorderkante (J) gelegen, oder in einem Bereich entsprechend der stromaufwärts gelegenen Hälfte des Schaufelblattes (34) gebildet wird;
**dadurch gekennzeichnet, dass** der Luftzirkulationskreis (44; 46) eine Luftausstoßöffnung (49; 52) beinhaltet, die an der Hinterkante (38) des Schaufelblattes (34) gebildet wird; und
- einen inneren Kanal (47; 53), der die Luftansaugöffnung (48; 51) mit der Luftausstoßöffnung (49; 52) verbindet.

2. Schaufel (31) nach Anspruch 1, wobei der innere Kanal (47; 53) eine Rohrschlange bildet, die mindestens eine Welligkeit umfasst.

3. Schaufel (31) nach Anspruch 1 oder 2, wobei die Ansaugöffnungen Löcher sind, und die Luftausstoßöffnung Schlitze sind.

4. Schaufel (31) nach einem der Ansprüche 1 bis 3, wobei der innere Kanal (47; 53) konfiguriert ist, um die Luft durch die Luftausstoßöffnung (49; 52) hindurch in eine Richtung auszustoßen, die auf 10° genau jene der Ausbreitung (G) des Luftstroms (21a), der dem Schaufelblatt (34) entlangführt, stromabwärts der Hinterkante (38) gelegen ist.

5. Schaufel (31) nach einem der Ansprüche 1 bis 4, wobei der innere Kanal (47; 53) eine Vielzahl von Luftansaugöffnungen (48; 51) mit einer Luftausstoßöffnung (49; 52) verbindet.

6. Schaufel (31) nach einem der Ansprüche 1 bis 4, wobei der innere Kanal (47; 53) eine Luftansaugöffnung (48; 51) mit einer Vielzahl von Luftausstoßöffnungen (49; 52) verbindet.

7. Schaufel (31) nach einem der vorstehenden Ansprüche, eine radial innere Plattform (39) und eine radial äußere Plattform (41) umfassend, und einen ersten Luftzirkulationskreis (44) im Bereich der radial inneren Plattform (39), und einen zweiten Luftzirkulationskreis (46) im Bereich der radial äußeren Plattform (41) umfassend.

8. Schaufel (31) nach einem der vorstehenden Ansprüche, die durch additive Herstellung erhalten wird.

9. Turbine (18; 19) für eine Turbomaschine eines Luftfahrzeugs, umfassend mindestens eine Schaufel (31) nach einem der vorstehenden Ansprüche, wobei die Turbine vorzugsweise eine Niederdruckturbine (19) ist.

10. Turbomaschine für ein Luftfahrzeug (11), umfassend mindestens eine Turbine (18; 19) nach dem vorstehenden Anspruch, wobei die Turbomaschine vorzugsweise eine Doppelkörper-Turbomaschine ist.

## Claims

1. Turbine vane (31) for a turbine engine, such as a turbojet engine, comprising:
- a blade (34) including a leading edge (37) and a trailing edge (38) and intended to be submerged in an air flow (21a) circulating from upstream to downstream from the leading edge to the trailing edge;
- at least one platform (39; 41) ending an end of the blade (34), this platform comprising an air glide face (39a; 41a) at the interface thereof with the blade (34);
- at least one air circulation circuit (44; 46) including:
- an air intake opening (48; 51) formed onto the glide face (39a; 41a) of the platform (39; 41), in a zone upstream from the leading edge (J) or in a zone corresponding to the upstream half of the blade (34);
**characterized in that** the air circulation conduit (44 ; 46) includes :
- an air discharge opening (49; 52) formed onto the trailing edge (38) of the blade (34);
- an inner conduit (47; 53) connecting the air intake opening (48, 51) to the air discharge opening (49, 52).

2. Vane (31) according to claim 1, wherein the inner conduit (47; 53) forms a coil including at least one undulation.

3. Vane (31) according to claim 1 or 2, wherein the intake openings are orifices, and the air discharge openings are slits.

4. Vane (31) according to any one of claims 1 to 3, wherein the inner conduit (47; 53) is configured to discharge air via the air discharge opening (49; 52) along a direction which is within 10° that of the propagation (G) of the air flow (21a) along the blade (34), downstream from the trailing edge (38).

5. Vane (31) according to any one of claims 1 to 4, wherein the inner conduit (47; 53) connects a plurality of air intake openings (48; 51) to an air discharge opening (49; 52).

6. Vane (31) according to any one of claims 1 to 4, wherein the inner conduit (47; 53) connects an air intake opening (48; 51) to a plurality of air discharge openings (49; 52).

7. Vane (31) according to any one of the preceding claims, comprising a radially internal platform (39) and a radially external platform (41), and comprising a first air circulation circuit (44) at the level of the radially internal platform (39), and a second air circulation circuit (46) at the level of the radially external platform (41).

8. Vane (31) according to any one of the preceding claims, obtained by additive manufacturing.

9. Turbine (18; 19) for an aircraft turbine engine comprising at least one vane (31) according to any one of the preceding claims, the turbine being preferably a low-pressure turbine (19).

10. Aircraft turbine engine (11) comprising at least one turbine (18; 19) according to the preceding claim, the turbine engine being preferably a double-body turbine engine.
